# EUROPÄISCHE PATENTSCHRIFT

(11) **EP 0 739 698 B1**
(45) Veröffentlichungstag und Bekanntmachung des Hinweises auf die Patenterteilung: **18.07.2001**
(21) Anmeldenummer: 96106064.7
(22) Anmeldetag: 18.04.1996
(51) Int. Cl.: B27K 3/52, B27K 3/50

(54) **Holzschutzmittel**
Wood preservative agent
Agent de préservation du bois

(30) Priorität: 28.04.1995 DE 19515211
(43) Veröffentlichungstag der Anmeldung: 30.10.1996
(73) Patentinhaber: Rütgers Organics GmbH, 68305 Mannheim (DE)
(72) Erfinder: Barth, Volker, Dr., 67071 Ludwigshafen (DE); Härtner, Helmut, Dr., 69469 Weinheim (DE); Beez, Volker, 68642 Bürstadt (DE)
(74) Vertreter: Grussdorf, Jürgen, Dr.

(56) Entgegenhaltungen:
- EP-A- 0 431 315
- EP-A- 0 482 433
- CH-A- 568 830
- DE-A- 3 742 627

## Beschreibung

Die Erfindung betrifft chromfreie Holzschutzmittel.

Aus der DE-A-34 47 027 sind Holzschutzmittel bekannt, die Kupfer- und Borverbindungen enthalten, wobei je g-Atom Kupfer 0,5 bis 2,5 g-Atom Bor und 2 bis 10 Mol eines Alkanolamins enthalten sind.

Gemäß DE-A-35 20 394 wird eine Kupfersalzlösung mit einem Alkanolamin und ggf. Alkali auf einen pH-Wert von mindestens 8 eingestellt. Ein derartiges Mittel kann zusätzlich ein Borsalz und andere wasserlösliche Fungizide, insbesondere quaternäre Ammoniumsalze (bis zu 25 Gew.-% des fertigen Mittels) enthalten. Durch Neutralisation durch Holzinhaltstoffe oder CO₂ aus der Luft werden die Kupfersalze fixiert. Aber die Wirkung dieser Mittel, insbesondere die Langzeitwirkung, ist trotz der zusätzlichen Verwendung von quarternärem Ammoniumsalz nicht ausreichend, um die vom Verbraucher gewünschte Schutzwirkung zu erzielen.

Auch die an sich naheliegende Zugabe weiterer fungizider Mittel erbringt keine wesentliche Verbesserung. Insbesondere verbleibt das Problem mit den ubiquitär vorhandenen Kupfer-resistenten Pilzen der Gattung Porea. Diese Pilze bewirken insbesondere im mit dem Kupfer-Alkanolamin-System imprägnierten Holz, daß das Kupfer wieder in eine lösliche Form gebracht und ausgewaschen wird.

Lediglich das aus DE-A-42 28 352 bekannte Mittel, bestehend aus Kupfersalz, Alkanolamin und polymerem, quartärem Ammoniumborat, löst dieses Problem. Aber auch dieses Mittel hat Nachteile. Es ist dies einerseits der allen Holzschutzmitteln auf Basis von Kupfer und Bor eigene Nachteil, daß Borsalze mit der Zeit ausgewaschen werden und deren Wirkung somit verloren geht, andererseits die Eigenart des polymeren, quartären Ammoniumborats, daß es in einer Imprägnieranlage bedingt, daß Harze aus dem Holz ausgelaugt werden, dadurch die durch die Harze bedingte Holzschutzwirkung verloren geht und daß die herausgelösten Harze die Anlagen verschmutzen und ihre Funktionsfähigkeit beeinträchtigen.

Es ist daher Aufgabe der Erfindung, ein chromfreies Holzschutzmittel bereitzustellen, das die beschriebenen Nachteile nicht hat.

Es ist weiterhin Aufgabe der Erfindung, ein weiteres Holzschutzmittel auf Basis von Kupfersalzen bereitzustellen, bei dem die Langzeitwirkung nicht durch die Kupfer-resistenten Pilze vermindert wird.

Es ist weiterhin Aufgabe der Erfindung, Holzschutzmittel auf der Basis von Kupfer- und Bor-Salzen bereitzustellen, in denen das Auswaschverhalten der Bor-Salze wesentlich reduziert ist. Darüber hinaus ist es Aufgabe der Erfindung, Mittel gemäß DE-A-42 28 352 so zu verbessern, daß der Nachteil der Harzauslaugung überwunden ist.

Aus der EP-A-0 431 315 sind Holzschutzmittel bekannt, welche wasserunlösliche Kupfersalze von C₅-C₂₀ Alkancarbonsäuren oder auch Dicarbonsäuren sowie Mischungen wasserlöslicher Kupferverbindungen mit solchen Säuren enthalten, bekannt. Zusätzlich sollen solche Mittel noch Polyamine als Komplexbildner und quartäre Ammoniumverbindungen als Emulgatoren enthalten.

Die EP-A-0 482 433 beschreibt ähnliche Mischungen, die zusätzlich noch komplexbildende, polymere Stickstoffverbindungen wie Polyethylenimine oder Polyamidoamine enthalten.

Die DE-A-37 42 627 offenbart die Verwendung quarternierter basischer aminogruppenaufweisender Umsetzungsprodukte von Fettsäuren und Polyalkylenpolyaminen, welche eine fungizide Wirkung aufweisen. Die Endprodukte enthalten aus der Herstellung voraussichtlich noch gewisse Mengen der bei der Synthese eingesetzten Fettsäuren als Verunreinigung.

Aus der CH-A-0 568 830 sind Holzschutzmittel bekannt, welche als schützende Komponente Kupfer, Zink, Nickel, Kadmium oder Kobalt mit einer oder mehreren Fettsäuren mit 6-12 C-Atomen enthält. Als Lösungsvermittler für das Lösen in organischen Lösemitteln kann zusätzlich noch Fettalkohol mit 6-11 C-Atomen enthalten sein. Zur Erhöhung der Löslichkeit in Wasser werden Ammoniak und Kohlendioxid in großem Überschuß zugefügt, welche nach der Imprägnierung langsam aus dem Holz verdampfen und die schwer löslichen Kupfer- und Fettsäureverbindungen zurücklassen.

Die Lösung der Aufgabe erfolgt durch Holzschutzmittel gemäß der Ansprüche 1-8.

Es wurde gefunden, daß die Wirkung von Holzschutzmitteln auf Basis von Kupfersalzen nicht mehr durch Kupferresistente Pilze vermindert wird, wenn diese Holzschutzmittel 2-35 Gew.-% eines Produktes aus 25-75 Gewichtsteilen Fettaminethoxylat und 75-25 Gewichtsteilen ungesättigter Fettsäure mit 3-25, bevorzugt mit 9-15 C-Atomen enthalten. Bedingt durch diesen Zusatz dringen Kupfer-Salze tief ins Holz ein, erfahren im Holz eine Art Fixierung und werden nicht durch Pilze abgebaut oder metabolisiert. Auch das Auswaschverhalten von Bor-Salzen wird wesentlich vermindert, so daß ein Langzeitschutz des Holzes gegeben ist.

Zusätzlich wurde gefunden, daß sich bereits Produkte aus 25-75 Gewichtsteilen Fettaminethoxylat und 75-25 Gewichtsteilen ungesättigter Fettsäuren mit 3-25, bevorzugt mit 9-15 C-Atomen als fixierende, fungizid und sektizid wirkende Holzschutzmittel eignen. Zwar ist die fungizide Wirkung einiger ungesättigter Carbonsäuren wie z.B. der Acryl- oder der Undecylensäure bekannt, jedoch ist überraschend, daß die Addukte dieser Säuren mit Fettaminethoxylaten sowohl fungizide als auch insektizide Wirkung haben und daß sie in Holz fixieren.

Weiterhin wurde gefunden, daß die Produkte aus Fettaminethoxylat und ungesättigten Fettsäuren nicht nur mit Kupfer- sondern auch mit Zinksalzen eine verbesserte fungizide Wirkung zeigen.

Im einfachsten Falle bestehen daher die erfindungsgemäßen Holzschutzmittel aus einer 1-35 %igen wäßrigen Lösung eines Produktes oder Produktgemisches aus 25-75 Gewichtsteilen Fettaminethoxylat und 75-25 Gewichtsteilen ungesättigter Fettsäuren mit 3-25, bevorzugt mit 9-15 C-Atomen.

In einer verbesserten Form bestehen die erfindungsgemäßen Holzschutzmittel aus einer 1-35 %igen wäßrigen Lösung eines Kupfer- und/oder Zinksalzes und 2-35 % des Produktes aus Fettaminethoxylat und ungesättigter Fettsäure. Ein gleiches Wirkungsprofil wird erhalten, wenn anstelle der ungesättigten Fettsäuren deren Kupfer-und/oder Zinksalze eingesetzt werden.

Das Eindringverhalten des Kupfers und des Zinks wird verbessert, wenn es mit Hilfe von Ammoniak, Aminen oder Alkanolaminen komplexiert ist. Dieser Effekt zeigt sich insbesondere deutlich, wenn die Holzschutzmittel noch Bor-Salze als zusätzliche fungizide Stoffe enthalten. Zur Komplexierung wird in diesen Mitteln bevorzugt Monoethanolamin eingesetzt.

Generell können den erfindungsgemäßen Holzschutzmitteln weitere an sich bekannte fungizide und/oder insektizide Mittel zugesetzt werden. Eine unerwünschte Wechselwirkung zwischen derartigen Mitteln und den eingesetzten Produkten aus Fettaminethoxylat und ungesättigter Fettsäure konnte bislang weder bei anorganischen noch bei organischen Fungiziden oder Bakteriziden beobachtet werden.

Aus Umweltgründen werden derzeit Borverbindungen, insbesondere Bor-Salze als fungizid wirkende Zusatzkomponenten bevorzugt.

Somit enthalten die bevorzugten Holzschutzmittel mindestens ein Kupfer- und/oder Zinksalz, ein oder mehrere Borverbindungen, ggf. weitere Insektizide und/oder Fungizide, Monoethanolamin, alle Komponenten in an sich bekannter Menge, sowie 2-35 Gew.-% eines Produktes aus Fettaminethoxylat und ungesättigter Fettsäure.

Die bevorzugte Borverbindung ist polymeres, quartäres Ammoniumborat, wie es aus EP-A-0 355 316 und DE-A-42 28 352 bekannt ist. Die insbesondere bevorzugten Holzschutzmittel sind demnach stabile wäßrige Emulsionen mit folgendem Aufbau:

| | |
|---|---|
| Kupfersalz | 10-25 Gew.-% |
| Ethanolamin | 30-40 Gew-% |
| Borsäure, Na-Borat polymeres, quartäres | 0- 8 Gew-% |
| Ammoniumborat Produkt aus Fettaminethoxylat und unges. | 5-40 Gew-% |
| Fettsäure | 2-35 Gew-% |
| Wasser | 10-50 Gew-% |

Diese Mittel liegen als Konzentrate vor, die vor Gebrauch mit Wasser auf eine Konzentration von 1-20 % des wäßrigen Konzentrats, bevorzugt von 1-4 % bei Verwendung im Vakuumdruckverfahren und von 3-15 % bei Verwendung in drucklosen Verfahren verdünnt werden.

Diese Mittel haben weitere unerwartete Eigenschaften: In maschinellen Imprägnierverfahren werden keine Harze aus dem Holz extrahiert, bzw. extrahierte und von der Oberfläche abgelöste Harze werden so gut emulgiert, daß sie mit eindringendem Holzschutzmittel wieder in das Holz transportiert werden. Die Imprägnieranlagen werden dadurch von jeglicher Harzbelastung freigehalten.

Der Zusatz der Produkte aus Fettaminethoxylat und ungesättigten Fettsäuren verbessert überraschenderweise die Einfärbbarkeit der Holzschutzmittel. Insbesondere Mittel mit quartären Ammoniumsalzen ließen sich bislang schlecht einfärben. Eine Braunfärbung war schlechterdings unmöglich, da sich derartige Mischungen in mehrere Phasen auftrennten. Durch Zusatz von etwa 2-35 % der genannten Produkte ergeben sich stabile, homogen gefärbte Emulsionen, die auch bei der Anwendung zu einer gleichmäßigen Färbung des imprägnierten Holzes führen.

Die in den erfindungsgemäßen Holzschutzmitteln eingesetzten Fettaminethoxylat/Fettsäure-Produkte werden hergestellt durch Vermischen von Fettaminethoxylaten mit ethylenisch ungesättigten Fettsäuren im Gewichtsverhältnis von 75:25-25:75, bevorzugt im Verhältnis von 50:50, d.h., die Carboxylgruppen und die Aminogruppen sollen in etwa im stöchiometrischen Verhältnis vorliegen, wobei Abweichungen bis zu 20 % tolerierbar sind.

Fettaminethoxylate sind Umsetzungsprodukte von Fettaminen, insbesondere Stearyl-, Kokosfett- oder Talgaminen mit Ethylenoxid wobei Ethoxylate mit einem Ethylenoxid-(EO-)Gehalt von 5-35 Einheiten pro Molekül entstehen. Die üblicherweise eingesetzten Ethoxylate sind Gemische unterschiedlich ethoxylierter Fettamine oder Fettamingemische.

Einsetzbare ethylenisch ungesättigte Fettsäuren sind Fettsäuren mit 3-30, insbesondere 9-15 C-Atomen, die einfach oder mehrfach ungesättigt sind. Beispiele für derartige Säuren sind Acryl-, Methacryl-, Butencarbon-, Citronell-, Sorbin-, Linol-, Linolen- oder Ölsäure.Bevorzugte ungesättigte Fettsäuren sind aliphatische Vinylcarbonsäuren, insbesondere Undecylensäure.

### BEISPIELE

### Beispiel 1

Kokosfettaminethoxylate je 1/3 mit einem EO-Gehalt von 10, 15 und 20 Ethylenoxideinheiten pro Molekül und Undecylensäure werden zu gleichen Gewichtsteilen unter Rühren miteinander vermischt. Als Produkt entsteht eine dünnflüssige, wasserlösliche Flüssigkeit mit einem pH von 7.

### Beispiel 2

Analog zu Beispiel 1 werden zu je gleichen Gewichtsteilen vermischt:
a. Stearylaminethoxylat je 1/4 mit einem EO-Gehalt von 10, 15, 20 und 25 Ethylenoxideinheiten
b. Undecylensäure Als Produkt entsteht eine dünnflüssige, wasserlösliche Flüssigkeit mit einem pH-Wert von 7.

### Beispiel 3

Analog zu Beispiel 1 werden zu je gleichen Gewichtsteilen vermischt:
a. Kokosfettaminethoxylat je 1/3 mit einem EO-Gehalt von 10, 15 und 20 Ethylenoxideinheiten
b. Ölsäure
Als Produkt entsteht eine dünnflüssige wasserlösliche Flüssigkeit mit einem pH-Wert von 7.

### Beispiel 4 (nicht erfindungsgemäß)

Analog zu Beispiel 1 werden zu je gleichen Gewichtsteilen vermischt:
a. Kokosfettaminethoxylat je 1/3 mit einem EO-Gehalt von 10, 15 und 20 Ethylenoxideinheiten
b. Stearinsäure
   Das Produkt ist in Wasser schlecht löslich und zeigt Bodensatz.

### Beispiel 5

Das Produkt aus Beispiel 1 wird als wäßrige Lösung verschiedener Konzentrationen in Probeklötzchen aus Kiefernholz eingebracht und analog zu EN 113 gegen holzzerstörende Pilze geprüft. Bestimmt werden die Grenzen der Wirksamkeit (Masseverlust 0 %) vor und nach Auswaschbeanspruchung gemäß EN 84.
Prüfpilz: Coniophora puteana (Masseverlust der nicht behandelten Vergleichsproben: 20,5 %).

| | | |
|---|---|---|
| Ergebnisse | Grenzen der Wirksamkeit vor Auswaschbeanspruchung | |
| | Konzentration der Tränklösung [%] 1,0-1,25 | Schutzmittelaufnahme [kg/m³] 6,9-8,8 |
| | Grenzen der Wirksamkeit nach Auswaschbeanspruchung | |
| | Konzentration der Tränklösung [% 0,63-1,0 | Schutzmittelaufnahme [kg/m³] 4,5-7,1 |

## Patentansprüche

1. Chromfreie Holzschutzmittel, dadurch gekennzeichnet, daß sie 1-35 Gew.-% eines Produktes aus 25-75 Gew.-Teilen Fettaminethoxylat und 75-25 Gew.-Teilen ungesättigter Fettsäure mit 3-25 C-Atomen oder deren Kupfer- und/oder Zinksalze, in wäßriger Lösung enthalten.

2. Holzschutzmittel nach Anspruch 1, dadurch gekennzeichnet, daß sie zusätzlich 1-35 Gew.-% eines Kupfer- und/oder Zinksalzes enthalten.

3. Holzschutzmittel nach Anspruch 2, dadurch gekennzeichnet, daß das Kupfer und/oder Zink mit Hilfe von Ammoniak, Aminen oder Alkanolaminen komplexiert ist.

4. Holzschutzmittel nach einem der Ansprüche 1-3 dadurch gekennzeichnet, daß es zusätzliche fungizide und/oder Insektizide Mittel enthält.

5. Holzschutzmittel nach Anspruch 4, dadurch gekennzeichnet, daß es eine oder mehrere Borverbindungen enthält.

6. Holzschutzmittel nach Anspruch 5, **dadurch gekennzeichnet**, daß es polymeres quartäres Ammoniumborat enthält.

7. Holzschutzmittel nach einem der Ansprüche 1-6, **dadurch gekennzeichnet**, daß das Fettaminethoxylat ein Stearyl- oder Kokosfett-aminethoxylat mit 10-30 Ethylenoxid-Einheiten ist.

8. Holzschutzmittel nach einem der Ansprüche 1-7, **dadurch gekennzeichnet**, daß die ungesättigte Fettsäure Undecylensäure ist.

## Claims

1. Chromium-free wood preser vatives, characterised in that they contain 1 - 35 wt.% of a product of 25 - 75 wt. parts of fatty amine ethoxylate and 75 - 25 wt. parts of unsaturated fatty acid with 3 - 25 C-atoms or its copper and/or zinc salts in aqueous solution.

2. Wood preservatives according to claim 1, characterised in that they additionally contain 1 - 35 wt.% of a copper and/or zinc salt.

3. Wood preservatives according to claim 2, characterised in that the copper and/or zinc is complexed with the help of ammonia, amines or alkanolamines.

4. Wood preservative according to one of claims 1 - 3, characterised in that it additionally contains fungicidal and/or insecticidal agents.

5. Wood preservative according to claim 4, characterised in that it contains one or more boron compounds

6. Wood preservative according to claim 5, characterised in that it contains polymeric quaternary ammonium borate.

7. Wood preservative according to one of claims 1 - 6, characterised in that the fatty amine ethoxylate is a stearyl or coconut fat amine ethoxylate with 10 - 30 ethylene oxide units.

8. Wood preservative according to one of claims 1 - 7, characterised in that the unsaturated fatty acid is undecylenic acid.

## Revendications

1. Agents de protection du bois exempts de chrome, caractérisés en ce qu'ils contiennent de 1 à 35 % en poids d'un produit constitué de 25 à 75 parties en poids d'éthoxylate d'amine grasse et de 75 à 25 parties en poids d'acide gras insaturé comptant de 3 à 25 atomes de C ou leurs sels de cuivre et/ou de zinc, en solution aqueuse.

2. Agents de protection du bois selon la revendication 1, caractérisés en ce qu'ils contiennent en outre de 1 à 35 % en poids d'un sel de cuivre et/ou de zinc.

3. Agents de protection du bois selon la revendication 2, caractérisés en ce que le cuivre et/ou le zinc est complexé à l'aide d'ammoniac, d'amines ou d'alcanolamines.

4. Agent de protection du bois selon l'une des revendications 1 à 3, caractérisé en ce qu'il contient en outre des agents fongicides et/ou insecticides.

5. Agent de protection du bois selon la revendication 4, caractérisé en ce qu'il contient un ou plusieurs composés du bore.

6. Agent de protection du bois selon la revendication 5, caractérisé en ce qu'il contient du borate d'ammonium quaternaire polymère.

7. Agent de protection du bois selon l'une des revendications 1 à 6, caractérisé en ce que l'éthoxylate d'amines grasses est un éthoxylate de stéarylamine ou d'amines grasses de coco comptant de 10 à 30 unités d'oxyde d'éthylène.

8. Agent de protection du bois selon l'une des revendications 1 à 7, caractérisé en ce que l'acide gras insaturé est l'acide undécylénique.
